# EUROPÄISCHE PATENTSCHRIFT

(11) **EP 2 572 432 B1**
(45) Veröffentlichungstag und Bekanntmachung des Hinweises auf die Patenterteilung: **29.04.2015**
(21) Anmeldenummer: 11732392.3
(22) Anmeldetag: 08.06.2011
(51) Int. Cl.: H02J 7/00, B60L 11/18, G08C 17/02

(54) **LADEVORRICHTUNG ZUM AUFLADEN VON ENERGIESPEICHERN SOWIE ENTSPRECHENDES VERFAHREN**
CHARGE DEVICE FOR CHARGING ENERGY STORES AND CORRESPONDING METHOD
DISPOSITIF DE CHARGE POUR RECHARGER DES ACCUMULATEURS D'ÉNERGIE ET PROCÉDÉ CORRESPONDANT

(30) Priorität: 30.09.2010 DE 102010041760; 30.06.2010 DE 102010025630
(43) Veröffentlichungstag der Anmeldung: 27.03.2013
(73) Patentinhaber: Siemens Aktiengesellschaft, 80333 München (DE)
(72) Erfinder: HEUER, Jörg, 82041 Oberhaching (DE)
(86) Internationale Anmeldenummer: PCT/EP2011/059481
(87) Internationale Veröffentlichungsnummer: WO 2012/000754

(56) Entgegenhaltungen:
- EP-A1- 2 058 916
- US-A1- 2007 145 945
- US-A1- 2009 302 801

## Beschreibung

Die Erfindung betrifft eine Vorrichtung zur elektrischen Energieversorgung, insbesondere zum Aufladen von mobilen Energiespeichern in Elektrofahrzeugen sowie ein entsprechendes Verfahren, ein entsprechendes Elektrofahrzeug sowie eine entsprechende Verwendung.

Ladevorrichtungen zur elektrischen Energieversorgung von Energiespeichern in Elektrofahrzeugen, beispielsweise zum Aufladen von Akkumulatoren, sind bereits in verschiedenen Ausführungsformen bekannt. Für den öffentlichen Gebrauch, beispielsweise bei öffentlichen Parkplätzen, werden häufig Ladevorrichtungen für die elektrische Energieversorgung in Form von Säulen verwendet. Diese werden über ein Kabel mit dem Elektrofahrzeug und damit mittelbar mit dem Akkumulator des Elektrofahrzeugs verbunden. Eine Steuerelektronik, sowohl in der Ladesäule als auch im Elektrofahrzeug überwacht das Aufladen des Akkumulators.

Aus der D1 (EP2058916A1) geht ein aus einem Elektrofahrzeug sowie einer Ladestation bestehendes Ladesystem hervor. Das Ladesystem beinhaltet Sende-/Empfangsmittel zur drahtlosen Übertragung von Authentisierungsinformationen, Authentisierungsmittel zur Authentisierung des Elektrofahrzeugs anhand der Authentisierungsinformation. Die Sende-/Empfangsmittel sehen einen die Authentisierungsinformationen enthaltenden Fahrzeugschlüssel vor, welche über die drahtlose Übertragung an das Elektrofahrzeug und in Folge an die Ladestation übertragen werden. Die zusätzliche Verwendung des Fahrzeugschlüssels zur drahtlosen Authentisierung löst die dortige Aufgabe, eine komfortable Authentisierung an einer Ladestation zu schaffen, welche nach einem Diebstahl des Elektrofahrzeugs ein weiteres unberechtigtes Laden auf Kosten des Eigentümers verhindert, da der Fahrzeugschlüssel üblicherweise beim Verlassen des Elektrofahrzeugs abgezogen wird.

Anspruch 1 ist gegenüber diesem Dokument abgegnert.

Aus der D2 (US2009/302801A1) geht ein aus einem Elektrofahrzeug sowie einer Ladestation bestehendes Ladesystem hervor. Das Ladesystem weist eine Ladesteuerung auf, welche die zeitliche Steuerung der Ladung unter Berücksichtigung des Ladezustands des Akkumulators steuert. Eine Kommunikation zwischen einer fahrzeugseitigen und einer ladestationsseitigen Ladesteuerung erfolgt über das Ladekabel.

Aus der D3 (US2007/145945A1) geht ein Verfahren zur Validierung eines Ladegeräts hervor, bei der das Ladegerät unter Berücksichtigung eines Identifikationsdatums des zu ladenden Akkumulators daraufhin überprüft wird, ob ein Ladevorgang durchgeführt werden darf oder aufgrund mindestens eines nicht übereinstimmenden Ladekriteriums abgelehnt wird.

Um ein unberechtigtes Aufladen des Elektrofahrzeugs an der Ladesäule zu vermeiden und gleichzeitig den nach erfolgreicher Authentifizierung gestarteten Ladevorgang an verschiedenen Parameter, beispielsweise ein maximaler Grenzwert eines Aufladestromes, eine maximale zugelassene Anschlussleistung oder von Kapazitäten der Akkumulatoren von Elektrofahrzeugen anzupassen, ist eine ISO/IEC-Standardisierung in Form von einer Fahrzeug-zu-Netz-Kommunikationsschnittstelle (Vehicle to Grid Communication Interface), kurz V2G-CI, entwickelt worden. Diese ermöglicht einerseits den Ladevorgang durch die Ladesäule für die Akkumulatoren des Elektrofahrzeugs entsprechend den Vorgaben durch das Elektrofahrzeug anzupassen, wenn dieses mit einem Ladekabel an die Ladesäule angeschlossen ist. Darüber hinaus können über diese Kommunikationsschnittstelle auch Informationen zwischen Elektrofahrzeug und Ladesäule ausgetauscht werden, die einen Nutzer des Elektrofahrzeugs bzw. das Elektrofahrzeug selbst anmelden bzw. authentisieren, so dass die Ladesäule dann den Akkumulator des Elektrofahrzeugs mit Strom über das Ladekabel versorgen kann.

Diese Informationen, beispielsweise über den Ladezustand des Akkumulators des Elektrofahrzeugs, werden erst übermittelt, wenn zum einen das Elektrofahrzeug über das Ladekabel mit der Ladesäule verbunden ist und zum anderen die Authentisierung des Elektrofahrzeugs erfolgreich war. Um das Ladekabel an die Ladesäule anschließen zu können, muss hierfür eine entsprechende Ladebuchse für das Ladekabel bei der Ladesäule zugänglich sein. Dadurch ist jedoch die Ladebuchse Vandalismusangriffen ausgesetzt. Um das Risiko von Vandalismusangriffen zu minimieren, wurde zum einen die Ladebuchse lediglich mit einer einfachen, freibeweglichen Klappe verdeckt, so dass der "Anreiz des Verborgenen" nicht gegeben ist. Zum anderen wurde die Ladebuchse hinter einer verriegelbaren Klappe verschlossen. Um ein Ladekabel an die mit der verriegelbaren Klappe verschlossene Ladebuchse anschließen zu können, muss jedoch diese Ladeklappe vor einem Anschließen des Ladekabels mit einem von der oben genannten Fahrzeug-zu-Netz-Standardisierung separaten Authentisierungsverfahren, beispielsweise per Handy-Applikation, RFID-Karte oder ähnlichem, entriegelt bzw. geöffnet werden.

Dies ist besonders dann auch erforderlich, falls die Ladebuchse der Ladesäule keine Authentisierung bzw. Kommunikation mittels der oben genannten Standardisierung ermöglicht, beispielsweise wenn die Ladebuchse in Form einer gewöhnlichen Schuco-Steckdose ausgebildet ist.

Eine Aufgabe der vorliegenden Erfindung ist es daher, eine Ladevorrichtung und ein Verfahren zum Aufladen von Energiespeichern zur Verfügung zu stellen, welche einfacher handhabbar bzw. durchführbar sind, kostengünstig hergestellt bzw. durchgeführt werden können und eine hohe Sicherheit und Schutz gegen Vandalismus oder unbefugte Benutzung ermöglichen.

Diese Aufgabe wird durch eine Ladevorrichtung zur elektrischen Energieversorgung, insbesondere zum Aufladen von Energiespeichern in Elektrofahrzeugen gemäß dem Anspruch 1, und durch ein Verfahren zum Aufladen von Energiespeichern gemäß dem Anspruch 5 gelöst. Selbstverständlich können die SendeEmpfangsmittel sowohl gemeinsam aufgeführt sein als auch getrennt als Sendemittel und Empfangsmittel. Der Begriff Sende-Empfangsmittel umfasst in der Beschreibung, insbesondere in den Ansprüchen, beide Ausführungsformen.

Der erzielte Vorteil dabei ist, dass durch die Funk-Vorauthentisierung eine Authentisierung bereits während des Vorgangs des Anschließens des Ladekabels an die Ladevorrichtung erfolgt, so dass insgesamt der Zeitaufwand für das Aufladen verkürzt wird. Gleichzeitig wird die Handhabbarkeit der Ladevorrichtung verbessert und das Aufladeverfahren vereinfacht ohne dass ein erhöhtes Vandalismusrisiko besteht.

Vorteilhafterweise sind Schutzmittel zum Schutz der Anschlussmittel vorgesehen, wobei die Schutzmittel mit den Authentisierungsmitteln derart zusammenwirken, so dass die Schutzmittel bei erfolgreicher Vorauthentisierung die Anschlussmittel freigeben. Der erzielte Vorteil dabei ist, dass zum einen die Handhabbarkeit der Ladevorrichtung noch weiter vereinfacht wird, da eine zweite Hand für das Entriegeln der Schutzmittel der Ladevorrichtung nicht mehr erforderlich ist, zum anderen wird der Schutz gegen Vandalismus erhöht, da erst durch die Funk-Vorauthentisierung die Ladeklappe freigegeben wird. Zudem ist die Lösung preisgünstig, da kein zweites, separates Authentisierungsverfahren wie zum Beispiel per RFID oder per Handy implementiert und verwaltet werden muss.

Zweckmäßigerweise sind Markierungsmittel an der Ladevorrichtung zur Kennzeichnung der Position der Sende-Empfangsmittel und/oder zur Kennzeichnung einer Position des zu positionierenden Ladekabels und/oder zur Kennzeichnung eines Ladesteckers angeordnet. Der erzielte Vorteil dabei ist, dass damit ein Fahrer eines Elektrofahrzeugs beim Anschließen des Landekabels an die Ladesäule die genaue Position der Sende-Empfangsmittel der Ladevorrichtung kennt und somit die Funk-Vorauthentisierung mittels des Ladekabels mit einer sehr geringen Sende-Empfangsleistung erfolgen kann, was zum einen Energie spart, zum anderen die elektromagnetische Abstrahlung auf ein Minimum reduziert. Beschreiben die markierungsmittel eine Position für eine Positionierung des Ladekabels oder Ladesteckers durch den Nutzer kann eine Vorauthentisierung und/oder Authentisierung noch zuverlässiger und mit geringer Sende-Empfangsleistung erfolgen.

Vorteilhafterweise sind die Sende-Empfangsmittel im Bereich der Schutzmittel angeordnet und insbesondere die Schutzmittel durchlässig für Funkwellen ausgebildet. Der erzielte Vorteil dabei ist, dass die üblicherweise optimale Position der Anschlussmittel für eine Handhabung der Ladevorrichtung, welche mit den Schutzmitteln geschützt sind, genutzt werden kann, so dass eine einfache Handhabbarkeit der Ladevorrichtung auch für die Funk-Vorauthentisierung des Elektrofahrzeugs ermöglicht wird.

Zweckmäßigerweise werden nach erfolgreicher Vorauthentisierung Schutzmittel des Anschlussmittels freigegeben, insbesondere automatisch geöffnet. Der erzielte Vorteil dabei ist, dass noch während des Annäherns des Ladekabels an die Ladevorrichtung die entsprechenden Anschlussmittel freigegeben werden, was die Flexibilität erhöht und Handhabbarkeit vereinfacht.

Vorteilhafterweise wird das Funk-Vorauthentisieren und/oder das Funk-Authentisieren in einem bestimmten Umgebungsbereich um die Ladevorrichtung, insbesondere an einer vorbestimmten Stelle der Ladevorrichtung durchgeführt. Der erzielte Vorteil dabei ist, dass lediglich relativ geringe Sende-/Empfangsleistungen des Ladekabels bzw. der Ladevorrichtung erforderlich sind, was zum einen energiesparend ist, zum anderen wird dadurch die elektromagnetische Abstrahlung durch die Ladevorrichtung bzw. durch das Ladekabel auf ein Minimum beschränkt.

Zweckmäßigerweise werden Sende-Empfangsmittel der Ladevorrichtung im Wesentlichen ständig, insbesondere passiv überwacht. Auf diese Weise wird sichergestellt, dass eine Funk-Vorauthentisierung jederzeit möglich ist und ein separates Einschalten der Ladevorrichtung durch einen Bediener der Ladevorrichtung entfallen kann. Werden die Sende-Empfangsmittel insbesondere passiv überwacht, wird damit erheblich Energie eingespart. Sind die Sende-Empfangsmittel, beispielsweise in Form einer Spule oder Antenne angeordnet, und ist die Spule oder Antenne mit Steuerungsmitteln verbunden, können diese beispielsweise bei Annäherung eines Ladekabels, welches elektrische Signale abstrahlt, die Signale beispielsweise wiederum als Induktionsstrom in der Spule detektiert werden. Weisen diese insbesondere noch ein spezielles Signalmuster auf, kann die Ladevorrichtung dann automatisch aktiviert werden. Im umgekehrten Fall, wenn der Ladevorgang beendet ist und das Ladekabel wiederum von der Ladevorrichtung entfernt wird, kann nach Wegfall der ausgesendeten elektrischen Signale des Ladekabels die Ladevorrichtung wieder in den passiven Betrieb wechseln, ohne dass der Fahrer des Elektrofahrzeugs hierfür weitere Handhabungsschritte der Ladevorrichtung durchführen muss.

Darüber hinaus ist es beispielsweise möglich, anstelle der Funk-Vorauthentisierung an der Ladevorrichtung eine zweite vereinfachte Buchse anzuordnen, an der das Ladekabel eingesteckt werden kann und so eine Vorauthentisierung des Elektrofahrzeugs ermöglicht wird.

Weitere Merkmale und Vorteile der Erfindung ergeben sich aus der nachfolgenden Beschreibung von Ausführungsbeispielen anhand der Figuren.

Dabei zeigt
- Fig. 1: eine Ladevorrichtung gemäß der ersten Ausführungsform der vorliegenden Erfindung sowie
- Fig. 2: ein Verfahren gemäß der ersten Ausführungsform der vorliegenden Erfindung.

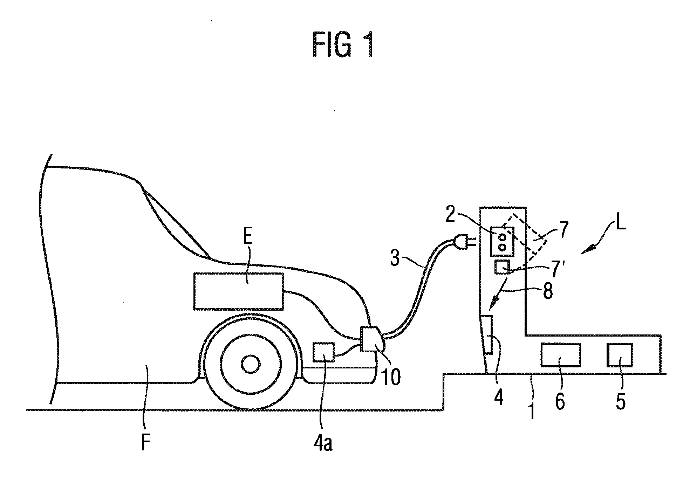

Fig. 1 zeigt eine Ladevorrichtung gemäß der ersten Ausführungsform der vorliegenden Erfindung.

In Fig. 1 ist ein Elektrofahrzeug F gezeigt, welches einen Energiespeicher E in Form von Akkumulatoren aufweist. Der Energiespeicher E ist mit einer Fahrzeuganschlussbuchse 10 für ein Ladekabel 3 verbunden. Des Weiteren ist eine Ladesäule L in Form einer Ladesäule angeordnet. Die Ladesäule L umfasst dabei eine Basis 1, an der im oberen Bereich eine Ladebuchse 2 vorgesehen ist. Die Ladebuchse 2 ist mit einer verschwenkbaren Ladeklappe 7, die mit einem Verriegelungselement 7' geschlossen werden kann, versehen.

Des Weiteren sind Markierungsmittel 8 in Form von Pfeilen auf der Oberseite der Ladesäule L angeordnet, welche die Position von Sende-Empfangsmitteln 4 kennzeichnen. Gemäß Fig. 1 sind die Sende-Empfangsmittel 4 in Form einer Antenne im unteren Bereich der Ladesäule L auf Höhe der Anschlussbuchse 10 des Fahrzeugs F angeordnet. Des Weiteren ist ein integrierter Schaltkreis 5 zum Steuern des Aufladens sowie entsprechende integrierte Schaltkreise 6 zur Authentisierung des Elektrofahrzeugs F in der Ladesäule L angeordnet. Diese wirken zum Aufladen und Authentisieren des Energiespeichers E bzw. des Elektrofahrzeugs F in üblicher Weise zusammen.

Um den Energiespeicher E des Elektrofahrzeugs F aufzuladen, wird nun das Ladekabel 3 zunächst an die Fahrzeug-Anschlussbuchse 10 des Energiespeichers E angeschlossen und das Ladekabel 3 wird in Richtung der Ladesäule L zu bewegt durch den Fahrer des Elektrofahrzeugs F. Aufgrund der V2G-CI-Standardisierung, welche Powerline-Kommunikation (PLC) verwendet, weisen das Ladekabel 3 und gegebenenfalls die Ladebuchse 2 eine entsprechend hohe elektromagnetische Abstrahlung auf. Wird also das Ladekabel 3 der Ladebuchse 2 oder - wie hier - den Sende-Empfangsmitteln 4 entsprechend genähert, wird aufgrund der elektromagnetischen Abstrahlung des Ladekabels 3 und der darin enthaltenen Authentisierungsinformation, welche vom Elektrofahrzeug F ständig und/oder nach initialem Handshake während das Ladekabel 3 an die Fahrzeug-Ladebuchse 10 angeschlossen ist, bereitgestellt wird, eine Funk-Vorauthentisierung vorgenommen. Unter "ständigem Bereitstellen" ist hier auch ein periodisches Bereitstellen der Authentisierungsinformation zu verstehen.

Ist die Funk-Vorauthentisierung erfolgreich, wird das Verriegelungselement 7' der Ladebuchse 2 freigegeben und die Ladeklappe 7 kann vom Fahrer des Elektrofahrzeugs F geöffnet werden, um einen Stecker des Ladekabels 3 an die Ladebuchse 2 anzuschließen. Selbstverständlich ist es denkbar, dass die Ladeklappe 7 elektromotorisch betätigt wird, wenn eine Funk-Vorauthentisierung erfolgreich war. In diesem Fall entriegelt und verschwenkt ein Elektromotor die Ladeklappe 7 und gibt den Zugang zur Ladebuchse 2 frei. Nach dem Einstecken des Ladekabels 3 wird eine vollständige Authentisierung vorgenommen, indem Authentisierungsinformationen vom Fahrzeug F über das Ladekabel 3 zu der Ladesäule L und dort zu entsprechenden Schaltkreisen 6 übertragen werden. Ist diese Authentisierung durch die integrierten Schaltkreise 6 erfolgreich, werden die integrierten Schaltkreise 5 zum Steuern des Aufladens des Energiespeichers E entsprechend betätigt und stellen die entsprechende elektrische Energie gemäß den Vorgaben des Elektrofahrzeugs F in der Ladebuchse 2 zur Verfügung, so dass diese über das Ladekabel 3 den Energiespeicher E beaufschlagen können und dieser aufgeladen wird. Ist der Energiespeicher E aufgeladen, wird über das Ladekabel 3 eine entsprechende Information an die Ladesäule L übermittelt. Die integrierten Schaltkreise 5 schalten nun die Ladebuchse 2 ab; der Ladevorgang ist somit beendet. Die integrierten Schaltkreise 5 können dabei dem Fahrer des Elektrofahrzeugs F ein entsprechendes optisches und/oder akustisches Signal zur Verfügung stellen, dass der Ladevorgang zu dem Energiespeicher E des Elektrofahrzeugs F beendet ist.

Entfernt nun der Fahrer das Ladekabel 3 aus der Ladebuchse 2 und/oder von der Fahrzeug-Ladebuchse 10 des Elektrofahrzeugs F, strahlt das Ladekabel 3 keinerlei elektromagnetische Wellen mehr aus. Die Antenne 4 empfängt keine Signale mehr und verschließt die Ladeklappe 7 durch Verschwenken derselben und/oder nach dem Verschwenken durch Betätigung des Verriegelungselementes 7', so dass die Ladebuchse 2 vor Vandalismus wiederum geschützt ist. Die Ladeklappe 7 kann dabei aus Metall oder Kunststoff bestehen. Besteht die Ladeklappe 2 aus Metall, ist diese besonders robust und gegen Vandalismus geschütz. Besteht die Ladeklappe aus Kunststoff, ist diese durchlässig für elektromagnetische Wellen. Auf diese Weise ist es möglich, die Antenne 4 auch direkt in der Ladebuchse 2 hinter der Ladeklappe 7 anzuordnen. Um die FunkVorauthentisierung vorzunehmen, muss sich der Fahrer lediglich mit eingesteckten Ladekabel 3 in der Fahrzeug-Ladebuchse 10 seines Elektrofahrzeugs F der Ladebuchse 2 der Ladesäule L nähern. Die elektromagnetischen Wellen, welche die Vorauthentisierungsinformation enthalten, durchdringen die KunststoffLadeklappe 2 und werden von der Antenne 4 detektiert bzw. empfangen. Diese leitet die erhaltene Vorauthentisierungsinformation an die entsprechenden integrierten Schaltkreise 6 zur Authentisierung weiter. Ist die Funk-Vorauthentisierung erfolgreich, wird wie vorstehend beschrieben die Ladeklappe 7 insbesondere motorisch freigegeben.

Um eine noch zuverlässigere Funk-Vorauthentisierung zu gewährleisten, kann die vom Elektrofahrzeug F bereitgestellte Sendeleistung für die Funk-Vorauthentisierung zumindest zeitweise erhöht werden, bis die Funk-Vorauthentisierung erfolgreich abgeschlossen ist.

In jedem Fall ist es insgesamt erforderlich, dass das Fahrzeug F jeweils über das Ladekabel 3 zumindest eine Vorauthentisierungsinformation zur Verfügung stellt, so dass diese via Funk-Vorauthentisierung an die Ladesäule L übertragen werden kann.

Selbstverständlich ist anstelle einer Vorauthentisierung auch eine vollständige Authentisierung möglich. Ein typischer Abstand, der zur Funk-Vorauthentisierung oder über eine vollständige Autorisierung via Funk ausreicht, beträgt weniger als 25 cm, insbesondere weniger als 15 cm, insbesondere ca. 10 cm. Dies stellt ein Optimum aus elektromagnetischer Abstrahlung einerseits und Handhabbarkeit des Ladekabels an der Ladesäule L andererseits dar.

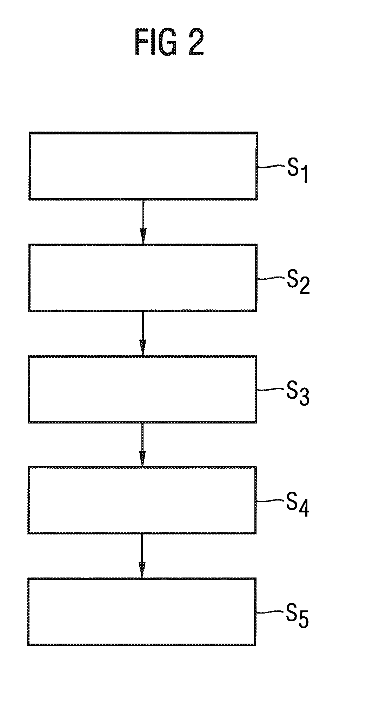

Fig. 2 zeigt ein Verfahren gemäß der ersten Ausführungsform der vorliegenden Erfindung. In Fig. 2 bezeichnet Bezugszeichen S₁ ein Verbinden eines Ladekabels 3 mit dem Elektrofahrzeug F, Bezugszeichen S₂ ein Funk-Vorauthentisieren des Elektrofahrzeugs F mittels des Ladekabels 3, Bezugszeichen S₃ ein Funk-Authentisieren S₃ des Elektrofahrzeugs F mittels des Ladekabels, Bezugszeichen S₄ ein Anschließen des Ladekabels an Anschlussmittel 2 der Ladevorrichtung L , sowie Bezugszeichen S₅ ein Bereitstellen von elektrischer Energie für den Energiespeicher E des Elektrofahrzeugs F mittels des Ladekabels 3.

### Bezugszeichenliste

- 1: Basis
- 2: Ladebuchse
- 3: Ladekabel
- 4: Antenne
- 5: integrierter Schaltkreis Aufladung
- 6: integrierter Schaltkreis Authentisierung
- 7: Ladeklappe
- 7': Verriegelungselement
- 8: Pfeile
- 10: Fahrzeuganschlussbuchse

- E: Akkumulator
- F: Elektrofahrzeug
- L: Ladesäule

## Patentansprüche

1. Ladevorrichtung (L) zur elektrischen Energieversorgung, insbesondere zum Aufladen von mobilen Energiespeichern, (E) in Elektrofahrzeugen (F) mit Anschlussmittel (2) zum Anschließen eines Ladekabels (3), Sende-Empfangsmittel (4) zum drahtlosen Senden und/oder Empfangen von Authentisierungsinformationen, und mit Authentisierungsmittel (6) zur Authentisierung des Elektrofahrzeuges (F) anhand einer Authentisierungsinformation, **gekennzeichnet dadurch, dass**
die Authentisierungsmittel (6) und die Sende-Empfangsmittel (4) zur Durchführung einer Funk-Vorauthentisierung und/oder eine Funk-Authentisierung des Elektrofahrzeuges (F) mittels einer elektromagnetischen Abstrahlung des am Elektrofahrzung angeschlossenen Ladekabels (3) durch Empfangen zumindest einer der elektromagnetischen Abstrahlung des Ladekabels (3) entnommenen Authentisierungsinformation vor dem Anschließen des Ladekabels (3) an die Anschlussmittel (2) ausgebildet sind.

2. Ladevorrichtung gemäß Anspruch 1,
wobei Schutzmittel (7) zum Schutz der Anschlussmittel (2) angeordnet sind, wobei die Schutzmittel (7) mit den Authentisierungsmitteln (6) derart zusammenwirken, dass die Schutzmittel (7) bei erfolgreicher Vorauthentisierung die Anschlussmittel (2) freigeben.

3. Ladevorrichtung gemäß zumindest einem der Ansprüche 1-2, wobei Markierungsmittel (8) an der Ladevorrichtung (L) zur Kennzeichnung der Position der Sende-Empfangsmittel (4) und/oder zur Kennzeichnung einer Position des zu positionierenden Ladekabels (3) und/oder eines Ladesteckers des Ladekabels (3) angeordnet sind.

4. Ladevorrichtung gemäß zumindest einem der Ansprüche 1-3, wobei Sende-Empfangsmittel (4) im Bereich der Schutzmittel (7) angeordnet sind und insbesondere die Schutzmittel (7) durchlässig für Funkwellen ausgebildet sind.

5. Verfahren zur elektrischen Energieversorgung, insbesondere zum Aufladen von mobilen Energiespeichern von Elektrofahrzeugen (F) an einer Ladevorrichtung (L) gemäß zumindest einem der Ansprüche 1-4,
umfassend die Schritte:
Verbinden (S₁) des Ladekabels (3) mit dem Elektrofahrzeug (F),
Funk-Vorauthentisieren (S₂) und/oder Funk-Authentisieren (S₃) des Elektrofahrzeugs (F) mittels einer elektromagnetischen Abstrahlung des Ladekabels (3) durch Empfangen zumindest einer der elektromagnetischen Abstrahlung des Ladekabels (3) entnommenen Authentisierungsinformation, Anschließen (S₄) des Ladekabels (3) die Anschlussmittel (2) der Ladevorrichtung (L), sowie
Bereitstellen (S₅) von elektrischer Energie für den Energiespeicher (E) des Elektrofahrzeugs (F) mittels des Ladekabels (3).

6. Verfahren gemäß Anspruch 5,
wobei zumindest nach erfolgreicher Vorauthentisierung (S₂) Schutzmittel (7) von Anschlussmittel (2) für das Ladekabel (3), insbesondere automatisch, freigegeben werden.

7. Verfahren gemäß zumindest einem der Ansprüche 5-6,
wobei das Funk-Vorauthentisieren (S₂) und/oder das Funk-authentisieren (S₃) in einem bestimmten Umgebungsbereich der Ladevorrichtung (L), insbesondere an einer vorbestimmten Stelle der Ladevorrichtung (L), durchgeführt wird.

8. Verfahren gemäß zumindest einem der Ansprüche 5-7,
wobei Sende-Empfangsmittel (4) der Ladevorrichtung (L) im Wesentlichen ständig und insbesondere passiv überwacht werden.

9. Verfahren gemäß zumindest einem der Ansprüche 5-8, wobei zumindest das Funk-Vorauthentisieren (S₂) des Elektrofahrzeugs (F) mittels einer erhöhten Sendeleistung erfolgt.

10. Elektrofahrzeug (F), das aufweist:
einen Energiespeicher (E), sowie
Fahrzeug-Sende-Empfangsmittel (4a) zum drahtlosen Senden und/oder Empfangen von Authentisierungsinfgrmationen mittels einer elektromagnetischen Abstrahlung eines am Elektrofuhrung angeschlossenen Ladekabels (3), wobei die Fahrzeug-Sende-Empfangsmittel (4a) derart ausgebildet sind, um eine Funk-Vorauthentisierung und/oder eine Funk-Authentisierung des Elektrofahrzeugs (F) an einer Ladevorrichtung (L)gemäß zumindest einem der Ansprüche 1-4, durchzuführen.

11. Elektrofahrzeug (F) nach Anspruch 10, wobei die Fahrzeug-Sende-Empfangsmittel (4a) derart ausgebildet sind, dass diese nach einem Anschluss eines Ladekabels (3) an das Elektrofahrzeug (F) zumindest Authentisierungsinformationen zur Funk-Vorauthentisierung mittels des Ladekabels, insbesondere mit einer erhöhten Sendeleistung, bereitgestellt werden.

12. Verwendung eines Ladekabels (3) für eine drahtlose Vorauthentisierung und/oder drahtlose Authentisierung eines Elektrofahrzeugs (F) an eines Lachunrichtung (L) gemäß einem der Anspruche 1-4 mittels einer elektromagnetischen Abstrahlung des am Elektrofuhrung angeschlossenem Ladekabels (3) durch Empfangen zumindest einer der elektromagnetischen Abstrahlung des Ladekabels (3) entnommenen Authentisierungsinformation, wobei das Ladekabel (3) zur elektrischen Energieversorgung eines Energiespeichers (E), insbesondere mobilen Energiespeichers (E) in Elektrofahrzeugen (F) an der Ladeeinrichtung (L) vorgesehen ist.

## Claims

1. Charging device (L) for supplying electrical energy, in particular for charging mobile energy stores (E) in electric vehicles (F), having
connecting means (2) for connecting a charging cable (3), transmitting/receiving means (4) for wirelessly transmitting and/or receiving authentication information, and authentication means (6) for authenticating the electric vehicle (F) using an item of authentication information,
**characterized in that** the authentication means (6) and the transmitting/receiving means (4) are designed to carry out radio prior authentication and/or radio authentication of the electric vehicle (F) using electromagnetic radiation from the charging cable (3) connected to the electric vehicle by receiving at least one item of authentication information taken from the electromagnetic radiation from the charging cable (3) before the charging cable (3) is connected to the connecting means (2).

2. Charging device according to Claim 1,
protecting means (7) for protecting the connecting means (2) being arranged, the protecting means (7) interacting with the authentication means (6) in such a manner that the protecting means (7) enable the connecting means (2) in the event of successful prior authentication.

3. Charging device according to at least one of Claims 1-2, marking means (8) being arranged on the charging device (L) for the purpose of marking the position of the transmitting/receiving means (4) and/or for marking a position of the charging cable (3) to be positioned and/or of a charging plug of the charging cable (3).

4. Charging device according to at least one of Claims 1-3, transmitting/receiving means (4) being arranged in the region of the protecting means (7), and the protecting means (7), in particular, being permeable to radio waves.

5. Method for supplying electrical energy, in particular for charging mobile energy stores of electric vehicles (F) at a charging device (L) according to at least one of Claims 1-4,
comprising the steps of:
connecting (S₁) the charging cable (3) to the electric vehicle (F),
carrying out radio prior authentication (S₂) and/or radio authentication (S₃) of the electric vehicle (F) using electromagnetic radiation from the charging cable (3) by receiving at least one item of authentication information taken from the electromagnetic radiation from the charging cable (3),
connecting (S₄) the charging cable (3) to the connecting means (2) of the charging device (L), and
providing (S₅) electrical energy for the energy store (E) of the electric vehicle (F) using the charging cable (3).

6. Method according to Claim 5,
protecting means (7) of connecting means (2) being enabled for the charging cable (3), in particular automatically, at least after successful prior authentication (S₂).

7. Method according to at least one of Claims 5-6,
the radio prior authentication (S₂) and/or the radio authentication (S₃) being carried out in a particular area surrounding the charging device (L), in particular at a predetermined position of the charging device (L).

8. Method according to at least one of Claims 5-7, transmitting/receiving means (4) of the charging device (L) being monitored substantially continuously and, in particular, passively.

9. Method according to at least one of Claims 5-8, at least the radio prior authentication (S₂) of the electric vehicle (F) being carried out using an increased transmission power.

10. Electric vehicle (F) having:
an energy store (E), and
vehicle transmitting/receiving means (4a) for wirelessly transmitting and/or receiving authentication information using electromagnetic radiation from a charging cable (3) connected to the electric vehicle, the vehicle transmitting/receiving means (4a) being designed to carry out radio prior authentication and/or radio authentication of the electric vehicle (F) at a charging device (L) according to at least one of Claims 1-4.

11. Electric vehicle (F) according to Claim 10,
the vehicle transmitting/receiving means (4a) being designed in such a manner that, after a charging cable (3) has been connected to the electric vehicle (F), they provide at least authentication information for radio prior authentication using the charging cable, in particular at an increased transmission power.

12. Use of a charging cable (3) for wireless prior authentication and/or wireless authentication of an electric vehicle (F) at a charging device (L) according to one of Claims 1-4 using electromagnetic radiation from the charging cable (3) connected to the electric vehicle by receiving at least one item of authentication information taken from the electromagnetic radiation from the charging cable (3), the charging cable (3) being intended to supply electrical energy to an energy store (E), in particular a mobile energy store (E) in electric vehicles (F) at the charging device (L).

## Revendications

1. Dispositif de charge (L) pour l'alimentation en énergie électrique, notamment pour la recharge d'accumulateurs d'énergie mobiles (E), dans des véhicules électriques (F), comprenant
des moyens de raccordement (2) pour le raccordement d'un câble de charge (3),
des moyens d'émission-réception (4) pour l'envoi et/ou la réception sans fil d'informations d'authentification, et
des moyens d'authentification (6) pour l'authentification du véhicule électrique (F) à l'aide d'une information d'authentification,
**caractérisé en ce que** les moyens d'authentification (6) et les moyens d'émission-réception (4) sont conçus pour effectuer une pré-authentification radio et/ou une authentification radio du véhicule électrique (F) au moyen d'un rayonnement électromagnétique du câble de charge (3) raccordé audit véhicule électrique, par réception d'au moins une information d'authentification, extraite du rayonnement électromagnétique du câble de charge (3), avant de raccorder le câble de charge (3) aux moyens de raccordement (2).

2. Dispositif de charge selon la revendication 1,
dans lequel des moyens de protection (7) sont prévus pour protéger les moyens de raccordement (2), les moyens de protection (7) coopérant avec les moyens d'authentification (6) de telle sorte que les moyens de protection (7) libèrent les moyens de raccordement (2) en cas de pré-authentification réussie.

3. Dispositif de charge selon au moins l'une des revendications 1-2,
dans lequel des moyens de marquage (8) sont disposés sur le dispositif de charge (L) pour identifier la position des moyens d'émission-réception (4) et/ou pour identifier une position du câble de charge (3) à positionner et/ou d'une prise de charge du câble de charge (3).

4. Dispositif de charge selon au moins l'une des revendications 1-3,
dans lequel les moyens d'émission-réception (4) sont disposés au niveau des moyens de protection (7), et dans lequel notamment les moyens de protection (7) sont conçus pour laisser passer les ondes radio.

5. Procédé destiné à l'alimentation en énergie électrique, notamment à la recharge d'accumulateurs d'énergie mobiles, de véhicules électriques (F) sur un dispositif de charge (L) selon au moins l'une des revendications 1-4, comprenant les étampes :
raccordement (S₁) du câble de charge (3) au véhicule électrique (F),
pré-authentification radio (S₂) et/ou authentification radio (S₃) du véhicule électrique (F) au moyen d'un rayonnement électromagnétique du câble de charge (3), par réception d'au moins une information d'authentification extraite du rayonnement électromagnétique du câble de charge (3),
raccordement (S₄) du câble de charge (3) aux moyens de raccordement (2) du dispositif de charge (L), ainsi que fourniture (S₅) d'énergie électrique pour l'accumulateur d'énergie (E) du véhicule électrique (F) au moyen du câble de charge (3).

6. Procédé selon la revendication 5,
dans lequel, au moins après pré-authentification (S₂) réussie, les moyens de protection (7) des moyens de raccordement (2) du câble de charge (3) sont libérés, notamment automatiquement.

7. Procédé selon au moins l'une des revendications 5-6,
dans lequel la pré-authentification radio (S₂) et/ou l'authentification radio (S₃) sont effectuées dans une zone déterminée autour du dispositif de charge (L), notamment à un endroit prédéterminé du dispositif de charge (L).

8. Procédé selon au moins l'une des revendications 5-7,
dans lequel les moyens d'émission-réception (4) du dispositif de charge (L) sont surveillés en permanence, et notamment passivement.

9. Procédé selon au moins l'une des revendications 5-8,
dans lequel au moins la pré-authentification radio (S₂) du véhicule électrique (F) s'effectue avec une puissance d'émission augmentée.

10. Véhicule électrique (F), lequel comporte :
un accumulateur d'énergie (E), ainsi que des moyens d'émission-réception (4a) de véhicule pour l'envoi et/ou la réception sans fil d'informations d'authentification au moyen d'un rayonnement électromagnétique d'un câble de charge (3) raccordé au véhicule électrique, les moyens d'émission-réception (4a) de véhicule étant conçus pour effectuer une pré-authentification radio et/ou une authentification radio du véhicule électrique (F) sur un dispositif de charge (L) selon au moins l'une des revendications 1-4.

11. Véhicule électrique (F) selon la revendication 10, dans lequel
les moyens d'émission-réception (4a) de véhicule sont tels qu'après raccordement d'un câble de charge (3) au véhicule électrique (F), ils fournissent au moins des informations d'authentification pour la pré-authentification radio au moyen dudit câble de charge, notamment avec une puissance d'émission augmentée.

12. Utilisation d'un câble de charge (3) pour une pré-authentification sans fil et/ou une authentification sans fil d'un véhicule électrique (F) sur un dispositif de charge (L) selon l'une des revendications 1-4 au moyen d'un rayonnement électromagnétique du câble de charge (3) raccordé audit véhicule électrique, par réception d'au moins une information d'authentification extraite du rayonnement électromagnétique du câble de charge (3), le câble de charge (3) étant prévu pour l'alimentation en énergie électrique d'un accumulateur d'énergie (E), notamment d'un accumulateur d'énergie mobile (E), dans des véhicules électriques (F) sur le dispositif de charge (L).
